Europäisches Patentamt

European Patent Office

Office européen des brevets

(11) Publication number: **0 260 352**
**A1**

# (12) EUROPEAN PATENT APPLICATION

(21) Application number: 86307077.7

(22) Date of filing: 15.09.86

(51) Int. Cl.4: **H04M 1/15** , H04Q 7/04

(43) Date of publication of application:
23.03.88 Bulletin 88/12

(84) Designated Contracting States:
**AT DE**

(71) Applicant: VANDERHOFF PLC
Bermuda Road
Nuneaton Warwickshire CV10 7QS(GB)

(72) Inventor: Maple, Peter
c/o Vanderhoff plc. Bermuda Road
Nuneaton Warwickshire CV10 7QS(GB)

(74) Representative: Murgitroyd, Ian G. et al
Murgitroyd and Company Mitchell House 333
Bath Street
Glasgow G2 4ER(GB)

(54) Mobile telephone answering and recording apparatus.

(57) Mobile radio telephones in vehicles provide a user with the facility to contact other subscribers whilst travelling. The problem with such systems however is that a user may have a number of visits to make during the course of a day and is therefore only in the vehicle for a short time thus reducing the usefulness of the telephone. Mobile telephone answering apparatus comprises a telephone answering machine I connected between a radio telephone transceiver 2 and a radio telephone control head 3. A push button on/off switch 4 and an LED indicator 5, or a control panel 6 may be connected to the answering machine I. The machine I has two mini cassette decks for an annoucement tape and a message recordal tape. When the user wishes to activate the answering machine an appropriate code button is operated thus bringing the answering machine into operation. The answering machine then functions to answer incoming calls after a predetermined period.

Fig.1

## Mobile Telephone Answering and Recording Apparatus

This invention relates to mobile telephone answering and recording apparatus.

### Background of the Invention

The use of mobile radio telephones in vehicles provides a user with the facility to contact other subscribers on the telephone network whilst travelling. This is particularly useful for business executives and others who do not wish to be out of touch with their office for long periods during the day. The problem with such systems however is that a business executive or travelling salesman may have a number of visits to make during the course of a day and is therefore only in the vehicle for a short time. This has the effect of reducing the usefulness of the radio telephone as the user is not always present to answer the telephone and thus important calls may still be missed.

### Brief Summary of the Invention

According to the present invention there is provided mobile radio telephone answering apparatus comprising means for detecting an incoming call; means for making an announcement to an incoming caller; means for recording a message from said incoming caller, said announcement means and said recording means each having actuating means operable by the detection means and the announcement means respectively, and interfacing circuitry for connecting the apparatus to a mobile radio telephone and to a power source.

Preferably, the announcement means and the recording means are first and second magnetic tape means.

The apparatus may be arranged to be operated by the mobile radio telephone controls completely or in conjunction with a separate on/off switch, or by separate operating controls.

Preferably also, microprocessor means are provided for controlling the apparatus.

Preferably also, the apparatus includes means for adjusting the time delay between the apparatus . detecting a call and answering the call.

Preferably also, the apparatus includes counter means for counting the number of incoming messages recorded.

Preferably also, the apparatus is operable so as to record both sides of a telephone conversation.

Preferably also, remote interrogation apparatus is included to allow a caller to replay messages recorded on the message tape.

### Brief Description of the Several Views of the Drawing

Embodiments of the present invention will now be described, by way of example, with reference to the accompanying drawings, in which:-

Fig. I is a schematic diagram of telephone answering apparatus in accordance with the present invention;

Fig. 2 is a part cut away perspective view of part of the telephone answering apparatus of Fig. I;

Fig. 3 is a perspective view of an on/off control of the telephone answering apparatus of Fig. I; and

Fig. 4 is a perspective view of a control panel of the telephone answering apparatus of Fig. I.

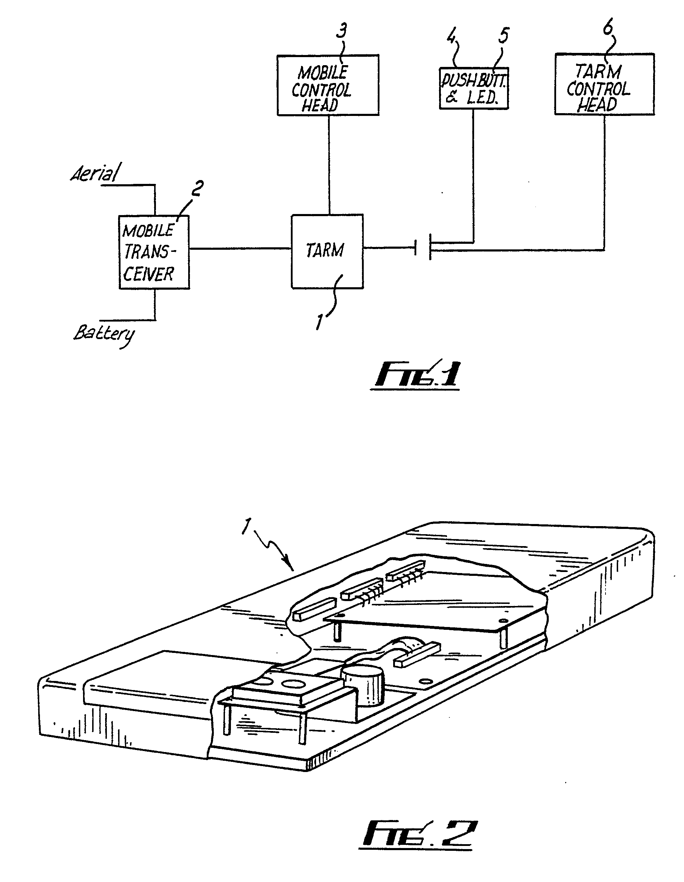

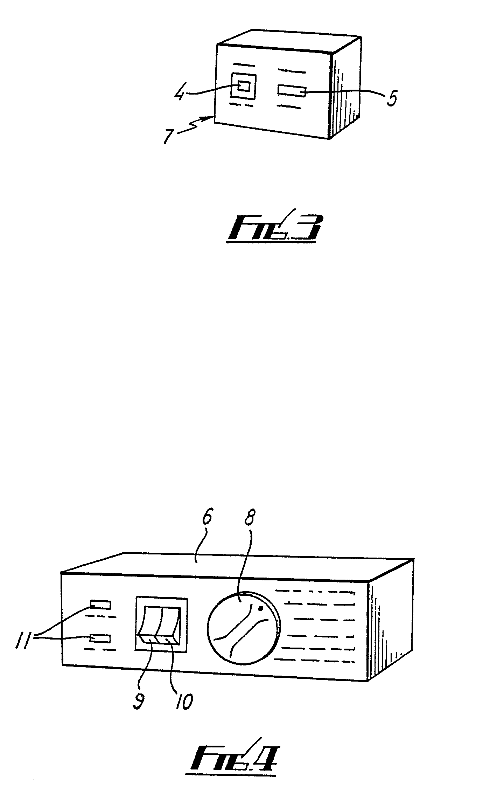

### Detailed Description

Referring to the drawings mobile telephone answering apparatus comprises a telephone answering machine I connected between a radio telephone transceiver 2 and a radio telephone control head 3. Optionally a push button on/off switch 4 and an associated LED indicator 5 or an answering apparatus control panel 6 may be connected to the answering machine I.

The telephone answering machine I has two mini cassette decks one for an announcement tape and one for a message recordal tape. The cassette decks together with a main control microprocessor are mounted on a main circuit board. A supplementary circuit board which contains the necessary control and switching circuitry for interfacing the answering machine with the mobile radio telephone apparatus is also fitted.

The push button 4 and LED indicator 5 are fitted to a small panel 7 and are connected to an auxiliary socket on the answering machine I. In use the panel 7 is mounted in a vehicle in a position where it can be easily operated by the driver.

The answering apparatus control panel 6 has a six way rotary switch 8, a push button 9, a two way switch IO and two LED's II. The panel 6 is connectable to the auxiliary socket on the answering machine I as an alternative to the push button on/off switch 4.

In use the operation of the apparatus is dependent on whether the push button 4 and LED 5 or the control panel 6 is fitted.

In the basic installation neither of these items are included and full control of the answering machine I is provided by the control head 3 of the mobile radio telephone apparatus.

Whilst the answering machine I remains deactivated the radio telephone functions to receive and send calls as normal. When the user wishes to activate the answering machine the appropriate code button is operated thus bringing the answering machine into operation. The answering machine then functions to answer incoming calls after a predetermined period.

As in a conventional answering machine the machine plays the announcement tape to the line after waiting for the paytone and plays a tone to the line after the announcement to signify that it is ready to record an incoming message. Any incoming message is then recorded and when the message is finished the machine automatically releases the connection. During an extended period of operation a display on the radio telephone apparatus indicates the number of calls received.

When desired the user can operate the message tape deck to replay the messages recorded. Full control of the tape deck is provided by numbered control buttons as follows:-

    I. Stop
    2. Record (while depressed)
    3. Rewind (while depressed) then replay
    4. Rewind only
    5. Fast forward
    6. Rewind whilst erasing
    7. Replay

The tape deck stops automatically when it reaches the end of the tape. The record button allows the user to use the machine as a dictation machine if desired. The apparatus also includes warning buzzers to signify tape rewind and message erasure.

A further push button marked "*" when pressed transfers control from the message tape deck to the announcement tape deck and the appropriate button can then be used to record, playback or erase an announcement message as desired. The button marked "//" can then be operated to return to the message tape deck.

Recording is carried out through the handset microphone and messages may be played back through the handset receiver. The answering machine can be set to answer incoming calls after an appropriate delay. Button O is pressed followed by I,2,3,4 or 5 to set a delay of 3,6,9,I2 or I5 seconds respectively.

The answering machine can also be set to refuse to answer calls by pressing button I0 and then restored to the answering condition by pressing button II.

A further facility allows both sides of a conversation to be recorded on the message deck during a normal call.

If the optional push button 4 and associated LED 5 are fitted then the answering machine can be set to answer calls without any operation of the radio telephone keyboard. The LED 5 is illuminated to show that the answering machine is switched into the circuit. In addition the push button 4 can be pressed during a call to record both sides of the conversation as above.

If the optional control panel 6 is included then all the functions of the answering machine can be controlled independently of the radio telephone keyboard controls. The six way rotary switch 8 controls the answering machine functions. To record outgoing announcements the switch 8 is set to 'record announcement' and the push button 9 pressed and held to allow the message to be recorded. After recording the button 9 is released which automatically records the appropriate tone on the tape and then rewinds the tape to the beginning of the message.

Switch 8 position 'replay announcement' allows, on operation of the push button 9, the message to be replayed. Switch 8 position 'rewind message' causes the message tape to be rewound and in conjunction with the push button 9 the message tape can be erased. Switch 8 position 'replay message' causes the tape to operate to replay the recorded incoming messages and in conjunction with push button 9 the tape may be run fast forward. The two further positions of the switch 8 'auto answer on' and 'auto answer off' switch the answering machine in or out of the circuit as desired. In operation the push button 9 can be pressed to monitor incoming calls and if desired a call can be intercepted by lifting the handset. The LEDs II when illuminated indicate that the tape deck is in motion or the machine is ready to accept calls. The LED which functions to signify that the deck is in motion also functions as a counter for the number of incoming calls received by giving a repeated sequence of flashes, up to a maximum of I5, to indicate the number of calls received.

A further refinement to the apparatus allows callers to interrogate the answering machine to replay messages from the message tape.

A single button coding device which uses pulse position modulation coding of one of I5 codes is used. On calling the caller waits for the termination of the announcement tape and then operates the coding device. The answering machine analyses the transmitted code and if it is acceptable transmits an acknowledgement tone followed by a series of tones to provide an indication of the number of calls received and a further completion tone. The caller then has the option to clear the line or by operating the coding device again to cause the answering machine to rewind the message tape and replay the first message. At the end of the message a tone sounds and the caller may then continue, to receive the next message, or operate the coding device to replay the previous message.

The caller may hang up at any time and the message tape will then run forward ready to accept further incoming messages.

If the caller reaches the end of the messages eight tones followed by a single tone are transmitted. The caller may then operate the coding device to rewind and start again. If the caller does not operate the coding device a further tone is transmitted at which stage the coding device may be operated to erase the tape.

Various interlocks are fitted to the apparatus so that operation of the answering machine cannot affect calls in progress and operation of the answering machine cannot be affected by further calls.

If an incoming call is received during record or replay then the answering machine must be deactivated before the call can be accepted.

The answering machine automatically stops answering calls when less than one minute of message tape remains. If the tape runs out during a call the machine disconnects the call after sending a tone. The appropriate display or LED then flashes on the apparatus as an indication of the tape end.

Modifications and improvements may be made without departing from the scope of the invention.

**Claims**

1. Mobile radio telephone answering apparatus comprising:-

Means for detecting an incoming call;

means for making an announcement to an incoming caller; and

means for recording a message from said incoming caller;

wherein said announcement means and said recording means each have actuating means operable by the detection means and the announcement means respectively and wherein interfacing circuitry is provided for connecting the apparatus to a mobile radio telephone and to a power source.

2. Mobile radio telephone answering apparatus as claimed in Claim 1, wherein the announcement means and the recording means are first and second magnetic tapes.

3. Mobile radio telephone answering apparatus as claimed in Claim 1 or 2, wherein means are included whereby the apparatus is controlled by the radio telephone controls.

4. Mobile radio telephone answering apparatus as claimed in any one of the preceding Claims, wherein microprocessor means are included for controlling the apparatus.

5. Mobile radio telephone answering apparatus as claimed in any one of the preceding Claims, wherein means are included for providing a variable time delay between the apparatus detecting an incoming call and actuating the announcement means.

6. Mobile radio telephone apparatus as claimed in any one of the preceding Claims, wherein counter means are included for counting the number of incoming messages recorded.

7. Mobile radio telephone apparatus as claimed in any one of the preceding Claims, wherein the recording means is operable to record both sides of a telephone conversation.

8. Mobile radio telephone apparatus as claimed in any one of the preceding Claims, wherein interrogation apparatus is included operable by a caller to replay to the caller messages recorded by the recording means.

**FIG.1**

**FIG.2**

FIG.3

FIG.4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 035 590 (BOSCH) <br> * Page 2, line 21 - page 4, line 2 * | 1-3 | H 04 Q 7/04 <br> H 04 M 1/65 |
| X | FR-A-2 303 429 (LABORATOIRE CENTRAL DE TELECOMMUNICATIONS) <br> * Page 5, line 31 - page 8, line 9; figures * | 1-3 | |

TECHNICAL FIELDS SEARCHED (Int. Cl.4)

H 04 Q
H 04 M

The present search report has been drawn up for all claims

| Place of search | Date of completion of the search | Examiner |
|---|---|---|
| THE HAGUE | 14-05-1987 | KEPPENS P.M.R. |

EPO Form 1503 03.82